# EUROPÄISCHE PATENTANMELDUNG

(11) **EP 3 709 048 A1**
(43) Veröffentlichungstag der Anmeldung: **16.09.2020**
(21) Anmeldenummer: 19161990.7
(22) Anmeldetag: 11.03.2019
(51) Int. Cl.: G01S 5/14, G01S 5/02

(54) **VERFAHREN UND SYSTEM ZUR POSITIONSBESTIMMUNG INNERHALB VON GEBÄUDEN**

(71) Anmelder: Umdasch Group NewCon GmbH, 3300 Amstetten (AT)
(72) Erfinder: Die Erfindernennung liegt noch nicht vor
(74) Vertreter: Sonn & Partner Patentanwälte

(57) **Zusammenfassung**

Die Erfindung bezieht sich auf ein System zur Bestimmung einer Position eines Senders (10) innerhalb eines Gebäudes (4), insbesondere innerhalb eines Rohbaus. Dazu wird ein Verfahren zum Betrieb des Systems vorgeschlagen, welches zumindest folgende Schritte aufweist:
- Aussenden eines Signals (11) durch den Sender (10)
- Empfangen des Signals (11) durch zumindest einen Empfänger (12), wobei der Empfänger (12) in einem Gebäudeelement (6), insbesondere einer Decke (7) oder einer Wand, eingebettet ist
- Bestimmung der Position des Senders (10) auf Basis des empfangenen Signals (11) und auf Basis der Position des zumindest einen Empfängers (12) mit Hilfe einer Auswerteeinheit (18).

Zudem wird ein Verfahren zur Initialisierung des Systems vorgeschlagen.

## Beschreibung

Die Erfindung betrifft ein Verfahren und ein System zur Bestimmung einer Position eines Senders innerhalb eines Gebäudes, insbesondere innerhalb eines Rohbaus.

Des Weiteren betrifft die Erfindung ein Verfahren zur Initialisierung des Systems.

Auf Baustellen gestaltet sich die Organisation und Planung der Bauprozesse wegen der sich ständig ändernden Umgebung in der Regel schwierig. Insbesondere die Organisation in der Rohbauphase stellt eine große Herausforderung dar, da viele Geräte und Maschinen an mehreren Orten auf der Baustelle benötigt werden und von unterschiedlichen Personen benutzt werden. Dabei ist es nicht einfach, den Überblick darüber zu bewahren, wo sich die Geräte und Maschinen befinden und wann diese benutzt werden. Um den Zeitaufwand für die Bauarbeiter gering zu halten, werden daher meist mehr Geräte und Maschinen zur Verfügung gestellt, als eigentlich notwendig wären, um die anfallenden Arbeiten verrichten zu können. Dennoch geht beim Suchen nach Geräten auf der Baustelle sehr viel Zeit verloren, und wenn schließlich ein entsprechendes Gerät gefunden wurde, ist nicht sichergestellt, dass dieses überhaupt funktionstüchtig ist. In einem illustrativen Beispiel benötigt ein Bauarbeiter im fünften Stock eines Gebäudes eine Bohrmaschine. Das Gerätelager, in dem die Bohrmaschinen bevorratet werden, befindet sich im Erdgeschoss, weshalb er sich auf den Weg zum Gerätelager begibt, obwohl ein anderer Bauarbeiter im vierten Stock gerade seine Arbeit abgeschlossen hat und deshalb eine Bohrmaschine im vierten Stock zur Verfügung stünde. Um unnötige Wege zu vermeiden und Zeit einzusparen, wäre es daher wünschenswert, die Position und den Betriebszustand von Geräten oder Maschinen jederzeit abrufen zu können.

Ein weiteres Problem, das sich insbesondere auf Großbaustellen stellt, ist die fehlende Orientierung von neuem Personal. Wenn Bauarbeiter zum ersten Mal auf eine Baustelle gelangen, müssen sie sich zunächst einen Überblick über die örtlichen Gegebenheiten verschaffen und ihren Arbeitsplatz mit Hilfe eines Plans aufsuchen oder von einem weiteren Bauarbeiter eingewiesen werden. Mit einer Positionsbestimmung und einer Navigationsmöglichkeit innerhalb von Rohbauten könnte die Orientierung auf Baustellen wesentlich erleichtert werden.

Um die Planung zu vereinfachen und den Zeitaufwand beim Suchen von Geräten und Orten auf Baustellen zu verkürzen, wäre es wünschenswert, ein System zur Verfügung zu stellen, das eine (Echtzeit-)Lokalisierung von Maschinen, Gegenständen und Personen bereits in der Rohbauphase erlaubt und gleichzeitig eine Navigationsmöglichkeit innerhalb von Gebäuden zur Verfügung stellt.

Aus dem Stand der Technik sind bereits Systeme zur Positionsbestimmung innerhalb von Gebäuden bekannt, die diese Anforderungen jedoch nicht oder nur unzureichend erfüllen können.

Unter anderem ist aus der US 2013/0225197 A1 ein "Beacon"-System bekannt, mit dem eine Orientierung innerhalb von Gebäuden ermöglicht werden soll. Die "Beacons", zu Deutsch "Leuchtfeuer", werden mit Hilfe von Schrauben oder Magneten an Wänden oder Decken befestigt und senden in zeitlichen Abständen Signale mit Positionsinformationen aus, die von Mobilgeräten empfangen werden können.

Daneben offenbart die WO 01/58098 A2 ein Positionsbestimmungssystem, mit dem an Orten, an denen keine GPS-Ortung möglich ist, eine Selbstortung von Mobilgeräten durchgeführt werden kann. Zur Verbesserung der Genauigkeit kann eine Triangulation vorgesehen sein. Nachteilig ist jedoch, dass zur Selbstortung zwischen den Mobilgeräten und dem fest installierten Teil des Systems eine bidirektionale Verbindung zum Austausch von Daten hergestellt werden muss, da die Positionsinformationen auf die Mobilgeräte übertragen wird. Darüber hinaus ermöglicht dieser Stand der Technik keine Positionsbestimmung in der Rohbauphase.

Bei den bekannten Verfahren wird in der Regel ein Signal von fest installierten Einheiten ausgesandt, welches eine Positionsinformation enthält und von mobilen Einheiten empfangen wird. Nachteilig daran ist zum einen, dass die mobilen Einheiten zusätzliche Rechen- und Akkukapazitäten aufweisen müssen. Zum anderen ist damit die Ortung anderer Objekte nicht oder nur eingeschränkt möglich.

Es ist daher Aufgabe der vorliegenden Erfindung, zumindest einzelne Nachteile des Standes der Technik zu lindern oder zu beseitigen. Insbesondere ist es Aufgabe der Erfindung, eine zuverlässige Positionsbestimmung von Objekten innerhalb eines Gebäudes bereits in dessen Rohbauphase zu ermöglichen.

Gelöst wird diese Aufgabe durch ein Verfahren nach Anspruch 1, ein System nach Anspruch 1 sowie ein Initialisierungsverfahren nach Anspruch 10. Bevorzugte Ausführungsvarianten sind in den abhängigen Ansprüchen angegeben.

Das erfindungsgemäße Verfahren weist zumindest die folgenden Schritte auf:
- Aussenden eines Signals durch den Sender;
- Empfangen des Signals durch zumindest einen Empfänger, wobei der Empfänger in einem Gebäudeelement, insbesondere einer Decke oder einer Wand, eingebettet ist; und
- Bestimmung der Position des Senders auf Basis des empfangenen Signals und auf Basis der Position des zumindest einen Empfängers mit Hilfe einer Auswerteeinheit.

Vorteilhafterweise ist es mit dem erfindungsgemäßen Verfahren daher möglich, eine Positionsbestimmung eines Senders durchzuführen, sobald das Gebäudeelement errichtet wurde, in dem der zumindest eine Empfänger eingebettet ist. Somit kann die Positionsbestimmung des Senders bereits in der Rohbauphase des Gebäudes erfolgen. Der Sender kann dabei an einem beweglichen Objekt, beispielsweise einer Maschine, einem Werkzeug oder einer Person, befestigt sein. Damit entspricht die Position des Senders im Wesentlichen der Position des Objekts. Für die Zwecke dieser Offenbarung wird als Rohbau ein Bauwerk bezeichnet, welches zumindest ein Gebäudeelement, wie beispielsweise ein Fundament, eine Wand, eine Säule oder eine Decke, aufweist, jedoch noch keine zweckbestimmte Nutzung als funktionstüchtiges Bauwerk ermöglicht. Im Fall eines Hochbaus weist der Rohbau insbesondere keine Fenster, Fassadenverkleidung und Innenausstattung auf. Auch Tunnel, Brücken, Betonteile der Infrastruktur (beispielsweise Widerlager, etc.) sollen für diese Offenbarung unter den Begriff Gebäude fallen. Das erfindungsgemäße Verfahren kann natürlich auch nach Abschluss sämtlicher Bautätigkeiten weiterverwendet werden.

Bei einer bevorzugten Ausführungsvariante wird der zumindest eine Empfänger während der Herstellung des Gebäudeelements, beispielsweise durch Aufstellen einer Schalung und anschließendem Eingießen des Empfängers in Beton, in dem Gebäudeelement aufgenommen. Bei einer alternativen Ausführungsvariante wird zunächst ein Aufnahmeelement für den Empfänger ohne den Empfänger selbst in dem Gebäudeelement aufgenommen. Bei dieser Ausführungsform wird der Empfänger nach der Herstellung des Gebäudeelements in das Aufnahmeelement eingefügt. Somit wird der Empfänger bei beiden Ausführungsvarianten in das Gebäudeelement eingebettet. Als Aufnahmeelement kann zum Beispiel ein Hohlkörper, beispielsweise eine Dose, vorgesehen sein. Im eingebetteten Zustand ist der Empfänger (oder das Aufnahmeelement für den Empfänger) zumindest teilweise, insbesondere zur Gänze, innerhalb des Gebäudeelements angeordnet. Der Empfänger oder das Aufnahmeelement ist bevorzugt durch Form- und/oder Kraftschluss im Gebäudeelement verankert. Durch die Einbettung im Gebäudeelement ist der Empfänger geschützt und unverlierbar angeordnet. Die Auswerteeinheit kann auch außerhalb des Gebäudeelements angeordnet sein. Weiters ist die Position des Empfängers bekannt und in einem Speicher hinterlegt. Um die Funkverbindung zwischen Sender und Empfänger nicht zu beeinträchtigen, ist es günstig, wenn der Empfänger oder das Aufnahmeelement von dem Gebäudeelement nicht vollständig umgeben ist und ein Teil des Empfängers frei von dem Gebäudeelement bleibt. Dadurch können auch defekte Empfänger leichter ausgewechselt werden. Gebäudeelemente im Sinne der Erfindung stellen beispielsweise Decken, Wände, Säulen oder Bodenplatten dar. Mit anderen Worten stellen Gebäudeelemente tragende und/oder raumbildende Elemente dar. Vorzugsweise besteht das Gebäudeelement aus Beton. Das Gebäudeelement kann aus mehreren Teilen bestehen, wie zum Beispiel eine aus mehreren Deckenelementen zusammengesetzte Decke. Abdeckungen oder Verkleidungen, wie beispielsweise abgehängte Gipskartondecken oder vorgestellte Gipskartonwände, Verputz oder ähnliches bilden keinen Teil des Gebäudeelements im Sinne der Erfindung Bei dem Empfänger und dem Sender handelt es sich um Funkempfänger und Funksender. Der Empfänger weist zumindest eine Empfangseinheit auf, der Sender weist zumindest eine Sendeeinheit auf. Vorzugsweise sind sowohl der zumindest eine Empfänger als auch der Sender als Bluetooth-Sender bzw. Bluetooth-Empfänger ausgebildet, wobei insbesondere der energiesparende Bluetooth Low Energy (BLE) Standard eingesetzt wird. Alternativ können zusätzlich oder an Stelle von Bluetooth auch andere Funktechniken, wie beispielsweise ZigBee, RFID oder UWB eingesetzt werden. Bevorzugt ist der Sender mobil, d.h. nicht am Gebäude oder einem anderen unbeweglichen Objekt befestigt, und verfügt über eine eigene Energieversorgung, wie zum Beispiel einen Akkumulator, eine Batterie und/oder eine Solarzelle. Der Sender kann unter anderem von einem Bauarbeiter getragen bzw. eingesteckt werden oder an einem Gerät (Bohrmaschine etc.), einer Maschine (Mischmaschine, Rüttler, Fahrzeug etc.), einem Gebrauchsmaterial (Kabel, Rohre etc.), Objekten zur logistischen Versorgung der Baustelle, Transportmittel für Lasten (Hubwagen, Umsetzgeräte, Palettenhubwagen, Lager- und Transportpaletten, etc.) oder an einem anderen beweglichen Objekt befestigt sein. Der Sender kann aber auch einen Teil des Objekts bilden und in dieses integriert sein. Wenn das Objekt über eine Energieversorgung verfügt, kann der Sender an diese Energieversorgung angeschlossen sein. Der Sender sendet in zeitlichen, vorzugsweise in regelmäßigen zeitlichen, Abständen Signale aus, die vom zumindest einen Empfänger empfangen werden können, wenn der Sender sich in dessen Empfangsbereich befindet. Bevorzugt sendet der Sender alle 0 bis 15 Minuten, vorzugsweise alle 0 bis 100 Sekunden, insbesondere alle 0 bis 5 Sekunden, selbstständig, d.h. von sich aus, ein Signal aus. Es kann aber auch vorgesehen sein, dass der Sender angeregt werden kann, beispielsweise durch Drücken eines Knopfes, ein Signal auszusenden. Nach dem Empfang des Signals durch den zumindest einen Empfänger wird auf Basis des empfangenen Signals der Abstand zwischen dem Sender und dem zumindest einen Empfänger ermittelt. Zu diesem Zweck kann das Signal Informationen über die Position des Senders beinhalten. Diese Informationen können beispielsweise die Signalstärke, Positionsinformationen (z.B. GNSS-Daten, insbesondere GPS-Daten) oder eine Zeitinformation ("Zeitstempel") sein, mit deren Hilfe der Abstand bestimmt werden kann. Die Information über die Position des Senders kann zusammen mit dem Signal an die Auswerteeinheit übermittelt werden oder aus dem Signal gewonnen werden. Mit dem Abstand zwischen dem Sender und dem Empfänger liegt eine lokale Positionsinformation in Bezug auf den zumindest einen Empfänger vor. Mit der Kenntnis der Position des Empfängers, welche an sich bekannt und in einem Speicher hinterlegt ist, kann die Position des Senders nun auch global in Bezug auf das Gebäude bestimmt werden. Die globale Position des Senders wird bestimmt, indem die lokale Positionsinformation des Senders relativ zum Empfänger mit der bekannten Positionsinformation des zumindest einen Empfängers verknüpft wird. Die Position des zumindest einen Empfängers liegt dabei exakt, beispielsweise in Form von geographischen Koordinaten, insbesondere GPS-Koordinaten, oder in Form von Gebäudedaten und/oder -koordinaten (beispielsweise Stockwerk und Position im Raum) vor. Bei Vorhandensein von nur einem Empfänger entspricht die (lokale) Position des Senders im Wesentlichen einer Kugeloberfläche um den Empfänger, da lediglich der Abstand zwischen Empfänger und Sender bestimmbar ist. Bevorzugt sind jedoch mehrere Empfänger vorgesehen. Je mehr Empfänger vorhanden sind und das Signal des Senders empfangen, desto exakter kann die Position des Senders, beispielsweise mittels Triangulation, bestimmt werden. Bei drei vorhandenen Empfängern existieren nur noch zwei mögliche Punkte, an denen sich der Sender relativ zu den Empfängern befinden kann. Vorzugsweise sind daher zumindest vier Empfänger in einem Gebäudeelement vorgesehen. Allerdings lässt sich durch Einbeziehung von Kenntnissen über die Umgebung, beispielsweise einem Bauplan des Gebäudes, auch bei weniger als vier Sendern, die das Signal empfangen, die Bestimmungsgenauigkeit der Position des Senders erhöhen. Beispielsweise können durch Schätzungen abwegige Positionen ausgeschlossen werden. So wäre unter anderem eine Position eines Senders außerhalb des Gebäudes im 5. Stockwerk eine abwegige Position, welche von der Schätzung ausgeschlossen werden kann. Die Bestimmung der Position des Senders erfolgt durch die Auswerteeinheit, welche vorzugsweise nicht Teil des zumindest einen Empfängers ist und jedenfalls auch keinen Teil des Sender bildet. Die Position des Senders kann in weiterer Folge mit einem Bauplan des Gebäudes verknüpft werden. Die Position des Senders kann von der Auswerteeinheit auf ein weiteres Gerät, beispielsweise einen Server, einen Computer oder ein Mobilgerät, wie ein Smartphone oder ein Tablet, übertragen werden. Bei einer bevorzugten Anwendung wird die Position des Senders von der Auswerteeinheit auf ein Mobilgerät übermittelt. Natürlich kann auch eine Vielzahl an Sendern gleichzeitig verwendet werden, die jeweils Signale aussenden und deren Positionen bestimmt werden kann. Zur Identifikation können sämtliche Sender jeweils eine eigene Sender-ID aufweisen, die in den durch die Sender ausgesandten Signale enthalten ist. Das Signal eines Senders kann neben der Sender-ID auch noch weitere Daten, wie etwa Messdaten eines Sensors oder Betriebszustandsdaten, enthalten. Zweckmäßigerweise kann der Sender hierzu mit einem Sensor oder einer Verarbeitungseinheit des Objekts, an dem er befestigt ist, verbunden sein.

In einer Ausführungsform kann vorgesehen sein, dass der Sender oder zumindest einer der Sender aus einer Mehrzahl an Sendern durch ein Mobilgerät mit Sendeeinheit, beispielsweise ein Smartphone oder ein Tablet, gebildet wird. Das Mobilgerät kann dann in zeitlichen Abständen ein Signal aussenden, das von dem zumindest einen Empfänger empfangen werden kann, woraufhin die Auswerteeinheit, wie oben beschrieben, die Position des Mobilgerätes respektive des Senders bestimmt. Die Position kann wiederum auf das Mobilgerät über ein Funknetz, beispielsweise WLAN, UMTS, Bluetooth oder LTE, übertragen werden. Dadurch kann die Position des Mobilgerätes innerhalb des Gebäudes bestimmt werden, wobei die Positionsbestimmung in der Auswerteeinheit stattfindet und erst anschließend auf das Mobilgerät übertragen wird. Zusätzlich kann die zur Verfügung gestellte Position des Mobilgerätes mit einem Bauplan verknüpft werden. Darüber hinaus können die mit der Auswerteeinheit bestimmten Positionen allfälliger weiterer Sender ebenfalls auf Mobilgerät übertragen werden. Dadurch kann ein Bauarbeiter die eigene Position (des Mobilgerätes) und die Position anderer Sender (Objekte) in dem Gebäude auf dem Mobilgerät feststellen, wobei die Positionen der Sender auf dem Bauplan grafisch angezeigt werden können. Es kann auch eine Route zwischen der Position des Mobilgeräts und einer anderen Position, beispielsweise der Position eines anderen Senders, insbesondere unter Berücksichtigung des Bauplans, bestimmt werden.

Günstig ist, wenn nach dem Empfang des vom Sender ausgesandten Signals durch den Empfänger die Signalstärke des Signals bestimmt wird und die Bestimmung der Position des Senders mit Hilfe der Auswerteeinheit auf Basis der Signalstärke und auf Basis der Position des zumindest einen Empfängers erfolgt. Zweckmäßigerweise kann die (ermittelte) Signalstärke gemeinsam mit dem Signal und gegebenenfalls einer Sender-ID an die Auswerteeinheit weitergeleitet werden. Da sich (Funk-)Signale typischerweise annähernd kugelförmig ausbreiten und die Signalstärke, also die Energie des Signals, zum Abstand vom Sender einen reziprokquadratisch Verhältnis, nämlich ∼1/r², bildet, kann unter Kenntnis der Signalstärke beim Aussenden des Signals und der Kenntnis der Signalstärke beim Empfang des Signals der Abstand zwischen Sender und Empfänger bestimmt werden. "r" bezeichnet dabei den Abstand zwischen Sender und Empfänger. Die erwähnte im Signal enthaltene Informationen über die Position des Senders wird hier also durch die Signalstärke gebildet.

Zusätzlich oder alternativ zur Bestimmung der Position über die Signalstärke kann es vorteilhaft sein, wenn nach dem Empfang des vom Sender ausgesandten Signals die Signallaufzeit des Signals zwischen dem Sender und dem Empfänger bestimmt wird und die Bestimmung der Position des Senders mit Hilfe der Auswerteeinheit auf Basis der Signallaufzeit des Signals und auf Basis der Position des zumindest einen Empfängers erfolgt. Zweckmäßigerweise kann die (ermittelte) Signallaufzeit gemeinsam mit dem Signal und gegebenenfalls einer Sender-ID an die Auswerteeinheit weitergeleitet werden. Um die Signallaufzeit zu bestimmen, kann der zumindest eine Empfänger eine Uhr aufweisen. Wenn mehrere Empfänger vorhanden sind, kann beispielsweise vorgesehen sein, dass jeder der Empfänger über eine eigene Uhr verfügt oder jedem Empfänger eine Uhrzeit von einer zentralen Uhr zur Verfügung gestellt wird. Bei Vorhandensein mehrerer Empfänger können demnach sämtliche Empfänger synchronisiert sein. Wenn die Bestimmung der Signallaufzeit zusätzlich zur Bestimmung der Signalstärke erfolgt, kann die Genauigkeit der Positionsbestimmung des Senders erhöht werden. Die Signallaufzeit des Signals ist dabei jene Zeit, die das Signal vom Sender bis zum Empfänger benötigt. Zur Bestimmung der Signallaufzeit kann das Signal einen Zeitstempel aufweisen, der die Sendezeit angibt, zu der das Signal ausgesandt wurde. Die Differenz zwischen der Sendezeit und der Zeit beim Empfangen des Signals durch den Empfänger entspricht im Wesentlichen der Signallaufzeit des Signals. Unter Einbeziehung der Ausbreitungsgeschwindigkeit des Signals kann der Abstand zwischen Sender und Empfänger bestimmt werden. Die im Signal enthaltene Informationen über die Position des Senders wird hier also durch die den Zeitstempel bzw. die Signallaufzeit des Signals gebildet.

Für eine genaue Positionsbestimmung des Senders ist es vorteilhaft, wenn zumindest zwei, bevorzugt zumindest drei oder zumindest vier angeordnete Empfänger in dem Gebäudeelement eingebettet sind, wobei die Position des Senders vorzugsweise mittels Triangulation bestimmt wird. Wenn zumindest drei Empfänger vorgesehen sind, können diese in einem Muster, wie beispielsweise einem Raster, einem Ring, einem Stern oder mäanderförmig, angeordnet sein. Grundsätzlich können die Empfänger auch unregelmäßig oder willkürlich angeordnet sein, eine vorteilhafte gleichmäßige Abdeckung des Empfangsbereichs ergibt sich aber durch eine regelmäßige Anordnung. Die Empfänger können miteinander mittels Abstandgeber, beispielsweise in Form von Seilen, Stangen, Kabeln oder Drähten, miteinander zu Netzen oder Gittern verbunden sein. Der Abstand zwischen den Empfängern beträgt bevorzugt zwischen 1 und 50 m, vorzugsweise zwischen 3 und 25 m, insbesondere zwischen 5 und 15 m. Als Muster kann insbesondere ein ebenes Raster vorgesehen sein, wobei die Empfänger jeweils in Ecken von Vielecken, insbesondere Rechtecken oder Quadraten, aus denen sich das Raster zusammensetzt, liegen. Mehrere Empfänger in einem Gebäudeelement sind vorzugsweise in einer gemeinsamen Ebene parallel zur Haupterstreckungsebene des Gebäudeelements eingebettet.

Um die Empfänger technisch möglichst einfach ausführen zu können, kann das von dem zumindest einem Empfänger empfangene Signal, vorzugsweise auch die Signalstärke und/oder die Signallaufzeit des Signals, an eine Basisstation übermittelt werden, welche sich vorzugsweise außerhalb des Gebäudeelements befindet. Die Basisstation kann die Auswerteeinheit beinhalten. Dadurch kann die zur Bestimmung der Position des Senders notwendige Berechnung, welche in der Auswerteeinheit stattfindet, auf eine Basisstation ausgelagert werden. Die Auswerteeinheit und die Basisstation können aber auch getrennt voneinander angeordnet sein. Bevorzugt ist die Basisstation außerhalb des Gebäudeelements angeordnet. Im Falle von mehreren Empfängern können sämtliche Empfänger mit der Basisstation verbunden sein. Als Basisstation kann unter anderem ein Computer oder ein Server fungieren. Als Auswerteeinheit kann ein (Mikro-)Prozessor dienen.

Um Fehlübertragungen zu vermeiden, kann in einer Ausführungsform vorgesehen sein, dass der zumindest eine Empfänger über ein insbesondere innerhalb des Gebäudeelements verlaufendes Datenkabel mit der Basisstation verbunden ist. Als Datenkabel wird vorzugsweise ein Ethernetkabel verwendet. Bei Vorhandensein mehrerer Empfänger in dem Gebäudeelement können die Empfänger auch untereinander über das Datenkabel oder über weitere Datenkabel, die ebenfalls vorzugsweise innerhalb des Gebäudeelement verlaufen, verbunden sein. Insbesondere kann vorgesehen sein, dass sämtliche Empfänger innerhalb eines Gebäudeelements untereinander direkt bzw. indirekt miteinander und mit der Auswerteeinheit mit Datenkabel/n verbunden sind. Bei indirekter Verbindung zwischen zwei Empfängern oder einem Empfänger und der Basisstation kann ein dazwischenliegender Empfänger die Daten weiterschleifen. Somit muss nicht jeder einzelne Empfänger direkt über ein eigenes Datenkabel mit jedem anderen Empfänger und mit der Auswerteeinheit verbunden sein. Das/die Datenkabel/n können auch als Abstandgeber zwischen den Empfängern dienen.

In einer Ausführungsform kann vorgesehen sein, dass der Sender und/oder der zumindest eine Empfänger jeweils eine Empfangseinheit und eine Sendeeinheit zum bidirektionalen Austausch von Daten aufweisen. Der Empfänger und der Sender können somit miteinander bidirektional kommunizieren. Dadurch kann nicht nur die Position des Senders bestimmt werden, sondern es können auch Daten an den Sender übertragen werden. Damit ist es beispielsweise möglich, eine Notabschaltung eines Geräts, an welchem der Sender angebracht ist, vorzunehmen oder Daten an ein Objekt zu übertragen. Zu diesem Zweck kann der Sender mit einer Verarbeitungseinheit des Objekts verbunden sein. Bevorzugt ist aber vorgesehen, dass der Sender ausschließlich eine Sende-Funktion, aber keine Empfangsfunktion übernimmt.

Vielfach kann es für die Baustellenplanung wünschenswert sein, wenn der Sender zusätzlich Daten übermittelt. Daher kann der Sender mit einem Objekt verbunden sein und das Signal Daten von dem Objekt, insbesondere Messdaten oder Daten über den Betriebszustand des Objekts, enthalten. Der Sender ist dabei derart mit dem Objekt verbunden, dass Daten von dem Objekt an den Sender übertragen werden können. Das Objekt kann hierzu beispielsweise eine Verarbeitungseinheit aufweisen, welche mit dem Sender verbunden ist. Das Objekt kann auch einen Sensor enthalten, die mittelbar über die Verarbeitungseinheit des Objekts oder unmittelbar mit dem Sender verbunden sein können, sodass Daten aus dem Sensor mit dem Sender an den zumindest einen Empfänger übertragen werden können.

Damit eine möglichst lange Funktionstüchtigkeit des zumindest einen Empfängers gewährleistet werden kann, kann der zumindest eine Empfänger über eine insbesondere innerhalb des Gebäudeelements verlaufende Energieversorgungsleitung mit einer Energieversorgung verbunden sein, welche sich vorzugsweise außerhalb des Gebäudeelements befindet. Bevorzugt weisen die Empfänger keine Energiespeicher wie Batterien oder Akkus auf. Wenn mehrere Empfänger in dem Gebäudeelement vorgesehen sind, können sämtliche Empfänger an die Energieversorgungsleitung angeschlossen sein. Die Energieversorgungsleitung kann auch gleichzeitig als Abstandgeber zwischen den Empfängern dienen. Die Energieversorgung ist vorzugsweise außerhalb des Gebäudeelements angeordnet und kann beispielsweise durch einen Akku, eine Batterie, oder besonders bevorzugt durch einen Anschluss an das Energieversorgungsnetz gebildet sein. Wenn das Gebäudeelement aus mehreren Teilen besteht, kann die Energieversorgungsleitung Verbindungsstellen enthalten. Als Verbindungsstellen können beispielsweise Stecker dienen. Damit ist es möglich, unterschiedliche Teile des Gebäudeelements getrennt voneinander herzustellen und erst anschließend über die Verbindungsstellen miteinander zu verbinden. Die Energieversorgungsleitung kann, sofern ein Datenkabel vorgesehen ist, mit diesem gemeinsam gebildet sein. Beispiel hierfür wäre ein Ethernetkabel, das auch gleichzeitig zur Energieversorgung dient, auch "Power over Ethernet" oder kurz PoE genannt.

Das erfindungsgemäße System weist zumindest folgende Merkmale auf:
- zumindest einen Empfänger zum Empfangen eines Signals des Senders, wobei der Empfänger zur Anordnung in einem Gebäudeelement, insbesondere innerhalb einer Decke oder einer Wand, des Gebäudes vorgesehen ist;
- einen Speicher, in dem die Position des Empfängers hinterlegt ist; und
- eine Auswerteeinheit, welche auf Basis des durch den Empfänger empfangenen Signals und auf Basis der Position des Empfängers die Position des Senders bestimmt.

Das System ist insbesondere dazu eingerichtet, das oben beschriebene Verfahren auszuführen. Hinsichtlich der Vorteile und Merkmale des Systems wird deshalb auf die Ausführungen im Zusammenhang mit dem obigen Verfahren verweisen. Umgekehrt gelten die Erläuterungen und vorteilhaften Ausgestaltungen im Zusammenhang mit dem System für das oben beschriebene Verfahren.

Der Empfänger kann, wie bereits im Zusammenhang mit dem Verfahren erwähnt, in ein Aufnahmeelement aufgenommen sein, welches in dem Gebäudeelement angeordnet ist.

Um Störungen des Systems zu vermeiden, ist in einer bevorzugten Ausführungsform vorgesehen, dass der zumindest eine Empfänger oder das Aufnahmeelement benachbart zu einer Oberfläche des Gebäudeelements angeordnet ist oder bündig und/oder im Wesentlichen eben mit der Oberfläche des Gebäudeelements abschließt. Der zumindest eine Empfänger ist dabei weiterhin zumindest teilweise, insbesondere zur Gänze, innerhalb des Gebäudeelements angeordnet. Vorteilhafterweise wird durch die Anordnung des Empfängers oder Aufnahmeelements benachbart zu der Oberfläche oder als bündiger Abschluss der Oberfläche des Gebäudeelements der Empfang des Signals des Senders nicht beeinträchtigt. Wenn der Empfänger und/oder das Aufnahmeelement bündig mit der Oberfläche des Gebäudeelements abschließt, bildet der Empfänger bzw. das Aufnahmeelement einen Teil der Oberfläche des Gebäudeelements. Wäre der Empfänger tiefer innerhalb des Gebäudeelements angeordnet, entstünde eine Dämpfung des Signals, was die Positionsbestimmung erschweren würde. Der Empfänger kann alternativ aber auch vollständig vom Gebäudeelement umgeben sein.. Darüber hinaus wird durch die Anordnung des zumindest einen Empfängers und/oder Aufnahmeelements an der Oberfläche ein Austausch des zumindest einen Empfängers ermöglicht.

Grundlegend für die Funktionsweise des beschriebenen Verfahrens und des Systems ist zum einen die Einbettung in das Gebäudeelement und zum anderen die Kenntnis der Position des zumindest einen Empfängers. Für das Verfahren und das System ist daher ein Verfahren zur Initialisierung mit den folgenden Schritten vorgesehen:
- Ermitteln der Position des zumindest einen Empfängers und/oder zumindest eines Aufnahmeelements für den Empfänger; und
- Hinterlegung der Position in dem Speicher.

Die Ermittlung der Position kann auf verschiedenste Weise erfolgen. Beispielsweise kann der zumindest eine Empfänger und/oder das Aufnahmeelement gemäß einem Plan platziert werden, in welchem die exakte Position des zumindest einen Sensors und/oder Aufnahmeelements vermerkt ist. Das Platzieren kann dabei von Hand erfolgen. Die Position wird von dem Plan in den Speicher übertragen. Andererseits kann der Empfänger und/oder das Aufnahmeelement platziert werden und erst anschließend die Position durch Ausmessen bestimmt und im Speicher hinterlegt werden. Die Bestimmung der Position kann auch mittels Computer-Vision-Technologie erfolgen. Hierbei werden Bilder oder Videos von platzierten Empfängern ausgewertet und deren Abstände zueinander ermittelt bzw. ein Bezug zum Gebäude hergestellt. Nachdem die Empfänger mit Strom- und/oder Datenleitungen verlegt wurden nimmt beispielsweise eine an einem Baustellenkran befestigte Kamera ein Bild oder ein Video von schräg oben auf die Baustelle bzw. auf die Deckenschalung mit bereits verlegten Empfängern auf. Anschließend kann das Bild mit einem Datenmodell (beispielsweise ein Bauplan) abgeglichen werden und/oder eine Bildanalyse stattfinden die, die verlegten Empfänger, und somit ihre Positionen, erkennt. Wichtig ist außerdem, dass ein absoluter Bezug zum Gebäude hergestellt wird und die Position des zumindest einen Empfängers in Bezug auf das Gebäude in den Speicher übertragen wird. Das Ausmessen kann wiederum auf verschiedenste Weise erfolgen. Zum einen kann mittels Maßband, eines Entfernungsmessgerät oder eines GNSS-Handgeräts (GNSS, Global Navigation Satellite System) die Position des zumindest einen Empfängers und/oder Aufnahmeelements bestimmt werden. Alternativ kann die Position mit Hilfe eines GNSS-Sensors, insbesondere eines GPS-Sensors, bestimmt werden. Dieser kann in den zumindest einen

Empfänger und/oder Aufnahmeelement integriert sein.

Um die Herstellung des Gebäudeelements und Ermittlung der Position des zumindest einen Empfängers und/oder Aufnahmeelements zu vereinfachen, ist in einer besonders bevorzugten Ausführungsform vorgesehen, dass nach der Ermittlung der Position der zumindest eine Empfänger und/oder des zumindest eine Aufnahmeelement in das Gebäudeelement eingegossen wird, wobei bevorzugt der zumindest eine Empfänger und/oder das zumindest eine Aufnahmeelement benachbart zu einer Oberfläche des Gebäudeelements liegt oder bündig mit der Oberfläche abschließt. Das Gebäudeelement wird vorzugsweise durch Gießen aus einem aushärtbaren Material, insbesondere Beton, hergestellt. Eine Positionsermittlung des zumindest einen Empfängers und/oder Aufnahmeelements nach dem Eingießen ist vergleichsweise schwierig, insbesondere dann, wenn ein Sensor wie ein GNSS-Sensor zur Ermittlung der Position eingesetzt wird. Deshalb findet bei dieser Ausführungsform die Ermittlung der Position des zumindest einen Empfängers und/oder des zumindest eine Aufnahmeelements vor dem Eingießen statt.

Bei der Herstellung des Gebäudeelements ist es günstig, wenn der zumindest eine Empfänger und/oder das zumindest eine Aufnahmeelement an einer Oberfläche einer Schalung platziert wird, wobei bevorzugt vorgesehen ist, dass der Empfänger zumindest für die Dauer der Herstellung des Gebäudeelements oder das Aufnahmeelement an der Schalung und/oder einer Bewehrung befestigt ist, insbesondere durch Verschrauben, Nageln, Kleben, Aufsetzen, Klipsen, Aufschieben und/oder Anbinden. Durch die Platzierung an der Oberfläche der Schalung schließt der Empfänger und/oder das Aufnahmeelement im Wesentlichen bündig mit der Oberfläche des Gebäudeelements ab. Um dabei ein Verschieben des zumindest einen Empfängers und/oder Aufnahmeelements oder Unterspülen mit Beton zu vermeiden, ist der zumindest eine Empfänger und/oder das Aufnahmeelement bevorzugt an der Schalung befestigt, bis der Beton ausgehärtet ist und die Schalung abgenommen wird. Wenn es sich um eine verlorene Schalung handelt, kann der Empfänger und/oder das Aufnahmeelement an der Schalung befestigt bleiben. Der zumindest eine Empfänger und/oder das Aufnahmeelement kann auch an der Bewehrung befestigt sein, wobei diese Art der Befestigung nach der Ausschalung nicht gelöst wird.

In einer besonders bevorzugten Ausführungsform werden zur Kalibrierung des Systems zumindest zwei Empfänger an einer im Speicher hinterlegten Referenzposition angeordnet und die Position eines weiteren Empfängers, der eine Sendeeinheit aufweist, wird bestimmt, indem der weitere Empfänger ein Kalibriersignal aussendet, welches von den zumindest zwei Empfängern empfangen wird, woraufhin die Position des weiteren Empfängers auf Basis der Signalstärke und/oder der Signallaufzeit des von den zumindest zwei Empfängern empfangenen Kalibriersignal mittels Triangulation ermittelt und im Speicher hinterlegt wird. Bei dieser Ausführungsform findet also eine Selbstkalibrierung des Systems statt, wobei zumindest zwei Empfänger an einer vorab bekannten Referenzposition, die ebenfalls im Speicher hinterlegt ist, angeordnet sind und die Ermittlung der Position eines weiteren Empfängers erfolgt. Das Kalibriersignal des weiteren Empfängers wird dabei von den Empfängern an den Referenzpositionen empfangen. Nach dem Empfang durch die Empfänger an den Referenzpositionen wird die Signalstärke und/oder die Signallaufzeit bestimmt und gemeinsam mit dem empfangenen Kalibriersignal an die Auswerteeinheit weitergeleitet. Das Kalibriersignal enthält bevorzugt auch noch eine Empfänger-ID des weiteren Empfängers, mit dem der weitere Empfänger identifiziert werden kann. Mit Hilfe der Empfänger an der Referenzposition kann die Position des weiteren Empfängers nach Empfang von dessen Kalibriersignals mittels Triangulation bestimmt und im Speicher hinterlegt werden. Nach erfolgter Selbstkalibrierung des Systems können dann alle Empfänger, also jene an der Referenzposition und die weiteren Empfänger, an der Positionsbestimmung des Senders mitwirken. Es ist auch denkbar, dass, sobald die Position eines weiteren Empfängers bestimmt und im Speicher hinterlegt wurde, die Position dieses weiteren Empfängers ebenfalls als Referenzposition dient. Der so hinzugefügte weitere Empfänger kann daher an der Positionsbestimmung eines anderen weiteren Empfängers, dessen Position noch nicht bestimmt worden ist, mitwirken. Die Zahl der Empfänger an Referenzpositionen wächst also und kann dadurch die Selbstkalibrierung des Systems verbessern. Die Bestimmung der Position des weiteren Empfängers findet bevorzugt vor dem Herstellen des Gebäudeelements, insbesondere vor dem Betonieren des Gebäudeelements, statt. Der Vorgang kann aber auch nach dem Herstellen des Gebäudeelements stattfinden.

Eine besonders einfache Selbstkalibrierung im obengenannten Sinne kann stattfinden, wenn das Gebäudeelement eine Decke oder eine Wand ist und die Referenzposition in einem Randbereich des Gebäudeelements liegt. Insbesondere ist es günstig, wenn die Referenzposition in einem stirnseitigen Randbereich des Gebäudeelements oder an einer Kante oder Ecke des Gebäudeelements liegt. Alternativ kann die Referenzposition auch weiter innerhalb, also von einem Randbereich entfernt, angeordnet sein.

Für eine besonders einfache Initialisierung des Systems kann vorgesehen sein, dass die Position des zumindest einen Empfängers und/oder des zumindest einen Aufnahmeelements mit Hilfe eines GNSS-Sensors ermittelt wird. Der GNSS-Sensor kann zu diesem Zweck in dem zumindest einen Empfänger und/oder Aufnahmeelement integriert sein.

Die Erfindung soll im Folgenden an Hand von Figuren näher erläutert werden, auf die sie allerdings nicht beschränkt sein sollen.
Fig. 1 zeigt schematisch ein dreigeschoßiges Gebäude im Querschnitt, wobei in mehreren Gebäudeelementen jeweils eine Mehrzahl von Empfängern angeordnet sind.
Fig. 2 zeigt ein herzustellendes Gebäudeelement mit mehreren Empfängern.
Fig. 3 zeigt ebenfalls ein herzustellendes Gebäudeelement mit mehreren Empfängern.
Fig. 4 zeigt ein Sequenzdiagramm zur Positionsbestimmung eines Senders und dessen Notabschaltung mit Hilfe des erfindungsgemäßen Systems.
Fig. 5 zeigt ein weiteres Sequenzdiagramm zur Positionsbestimmung eines Senders und Ausgabe eines Signals an ein weiteres Objekt.

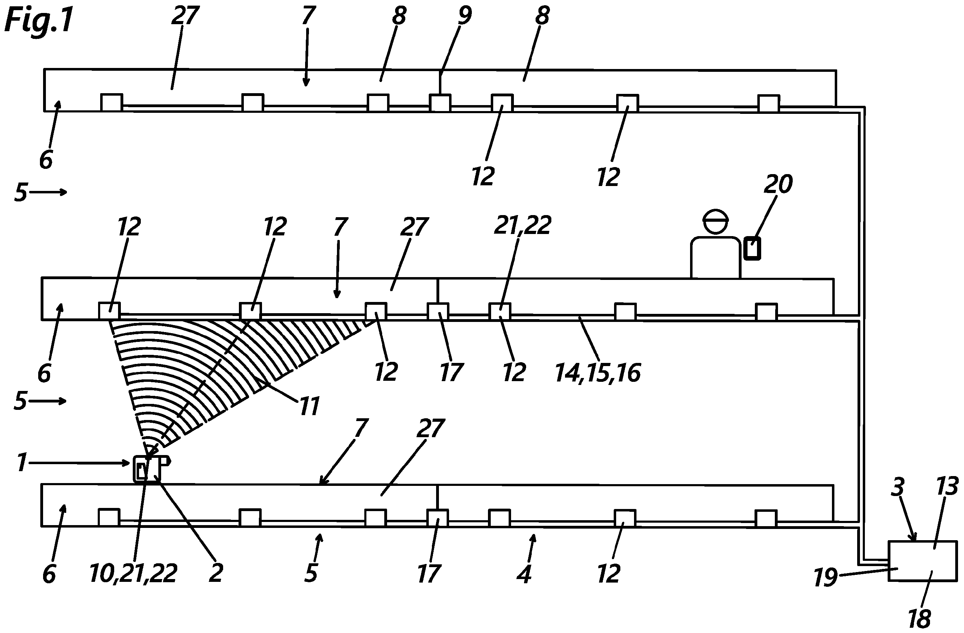

Anhand von Fig. 1 soll eine Positionsbestimmung eines Objektes 1 in Form einer Bohrmaschine 2 mit Hilfe eines Systems 3 veranschaulicht werden.

Fig. 1 zeigt ein Gebäude 4 im Rohbau mit zwei Ebenen 5 schematisch im Querschnitt. Jede Ebene 5 wird jeweils oberhalb durch ein Gebäudeelement 6 in Form einer Decke 7 begrenzt. Jede der gezeigten Decken 7 setzt sich jeweils aus zwei Deckenelementen 8 zusammen, wobei zwischen den Gebäudeelementen 6 eine Fuge 9 befindet.

Das Objekt 1 befindet sich auf der ersten Ebene 5 und weist einen Sender 10, insbesondere einen Bluetooth-Sender, auf, welcher in das Objekt 1 integriert ist. Der Sender 10 kann alternativ auch außerhalb des Objekts 1 angeordnet und mit diesem mechanisch verbunden sein. Der Sender 10 sendet in zeitlichen Abständen, insbesondere in zeitlich regelmäßigen Abständen, ein Signal 11 aus, das von mehreren in der Decke 7 eingebetteten Empfängern 12 empfangen wird. Die Empfänger 12 schließen bündig mit der Unterseite der Decke 7 ab. Da die Decke 7 das Signal 11 stark dämpft, wird das Signal 11 meist nicht von den Empfängern 12 in den Decken 7 den anderen Ebenen 5 empfangen.

In der gezeigten Darstellung wird das Signal 11 von drei Empfängern 12 empfangen. Nach dem Empfang wird die Signalstärke und/oder die Signallaufzeit des Signals 11 bestimmt und an eine Auswerteeinheit 18 weitergeleitet. Die Auswerteeinheit 18 kann innerhalb oder außerhalb des Gebäudeelements 6 angeordnet sein. Die Auswerteeinheit 18 kann sich auch, wie in den Figuren dargestellt, in einer Basisstation 13 außerhalb des Gebäudeelements 6 befinden. Die Signallaufzeit des Signals 11 entspricht der Zeit, die das Signal 11 benötigt, um den Weg zwischen dem Sender 10 und einem Empfänger 12 zurückzulegen. Selbstverständlich kann die Position des Senders 10 auch auf Basis anderer Informationen bestimmt werden. Es ist beispielsweise möglich, dass der Sender 10 seine Position mit Hilfe einer GNSS-Einheit, insbesondere einer GPS-Einheit, in Form von GNSS-Koordinaten bestimmt und mit dem Signal 11 an die Empfänger 12 übermittelt. In den Ausführungsbeispielen wird jedoch bevorzugt die Signalstärke und/oder die Signallaufzeit des Signals 11 zur Bestimmung der Position des Senders 10 herangezogen. Das Signal 11 enthält zur Identifikation des Senders 10 eine eindeutige Sender-ID. Das Signal 11 kann aber auch noch andere Daten, wie beispielsweise Messdaten von Sensoren des Objekts 1, enthalten. Die Weiterleitung an die Basisstation 13 erfolgt bevorzugt, wie dargestellt, über ein Datenkabel 14, das in das Gebäudeelement 6 eingebettet ist. Auch die Energieversorgung der Empfänger 12 kann über eine Energieversorgungsleitung 15 stattfinden. Das Datenkabel 14 und die Energieversorgungsleitung 15 können zweckmäßigerweise, wie in den Figuren dargestellt, durch ein gemeinsames Kabel 16 gebildet sein. Sämtliche Kabel können Stecker 17 aufweisen, um das Herstellen des Gebäudeelements 6 zu erleichtern. Das Datenkabel 14 und das Energieversorgungskabel 15 können jedoch natürlich auch voneinander getrennte Kabel sein. Durch die Energieversorgungsleitung 15 können die Empfänger 12 selbst frei von Akkus oder Batterien sein. Zum Einsatz als gemeinsames Kabel 16 kommt zweckmäßigerweise ein Ethernetkabel mit Energieversorgung (PoE, "Power over Ethernet"). An der Fuge 9 zwischen den Deckenelementen 8 weist das gemeinsame Kabel 16 eine Verbindungsstelle in Form eines Steckers 17 auf. Damit wird das Zusammenbauen der Decke 7 erheblich erleichtert. Wenn das Datenkabel 14 und die Energieversorgungsleitung 15 getrennt eingebettet sind, können auch diese zwischen den Deckenelementen 8 Verbindungsstellen aufweisen.

Das Signal 11, die Sender-ID und/oder die Signalstärke bzw. die Signallaufzeit wird/werden von den Empfängern 12 über das gemeinsame Kabel 16 weiter zur Basisstation 13 geleitet, in der sich die Auswerteeinheit 18 befindet, die auf Basis der Signalstärke und/oder der Signallaufzeit und mittels Triangulation die Position des Senders 10 (und damit des Objekts 1) relativ zu den Empfänger 12, die das Signal 11 empfangen haben, ermittelt. Damit liegt quasi eine lokale Position des Objektes 1 vor. In der Basisstation 13 befindet sich auch ein Speicher 19, in dem die genauen Positionen sämtlicher Empfänger 12 in Bezug auf das Gebäude 4 hinterlegt sind. Zweckmäßigerweise kann in dem Speicher 19 auch ein Plan des Gebäudes 4 hinterlegt sein. Durch Verknüpfung der Positionen der Empfänger 12, die das Signal 11 empfangen haben, mit der lokalen Position des Senders 10 in Bezug auf diese Empfänger 12 kann nun eine globale Position des Senders 10 in Bezug auf das Gebäude 4 bestimmt werden. Damit wurde eine Positionsbestimmung des Senders 10 durchgeführt.

Die Position des Senders 10 kann in weiterer Folge zum Beispiel an ein Gerät, beispielsweise ein Mobilgerät 20 wie in den Figuren dargestellt, übertragen werden. Das Mobilgerät 20 befindet sich in Fig. 1 in der zweiten Ebene 5. Um die Position des Objektes 1 an das Mobilgerät 20 zu übertragen, muss eine Verbindung zwischen der Basisstation 13 und dem Mobilgerät 20 hergestellt werden. Hierzu können die Basisstation 13 und das Mobilgerät über ein separates Funknetz, beispielsweise über WLAN oder UMTS, verbunden sein. Bevorzugt weisen aber die Empfänger 12 neben einer Empfangseinheit 21 zum Empfangen der Signale 11 auch noch eine Sendeeinheit 22 zum Senden von Daten auf. Die Empfänger 12 sind somit in der Lage, eine Kommunikationsverbindung mit dem Mobilgerät 20 herzustellen und die von der Basisstation 13 zur Verfügung gestellte Daten an das Mobilgerät 20 zu übertragen. Möglich ist zudem, auch noch einen Bauplan des Gebäudes an das Mobilgerät 20 zu übertragen, um das Auffinden des Objekts 1 zu erleichtern. Die Position des Objekts 1 kann in dem Bauplan eingetragen sein und durch das Mobilgerät 20 grafisch angezeigt werden. Es kann auch eine Route innerhalb des Gebäudes 4 ermittelt werden, die zu dem Objekt 1 führt.

Wie die Empfänger 12 kann auch der Sender 10 eine Empfangseinheit 21 und eine Sendeeinheit 22 besitzen. Damit können Daten an den Sender 10 übertragen werden. Dadurch ist es unter zum Beispiel möglich, einen Befehl zur Notabschaltung von der Basisstation 13 oder dem Mobilgerät über die Empfänger 12 an den Sender 10 zu übertragen. Der Sender 10 kann diese Daten an das Objekt 1, insbesondere an eine Verarbeitungseinheit des Objekts 1, weitergeben.

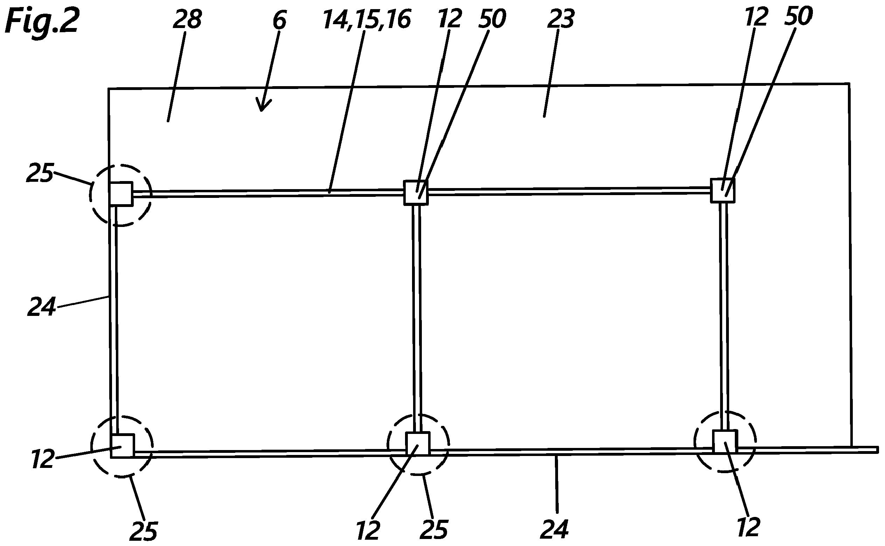

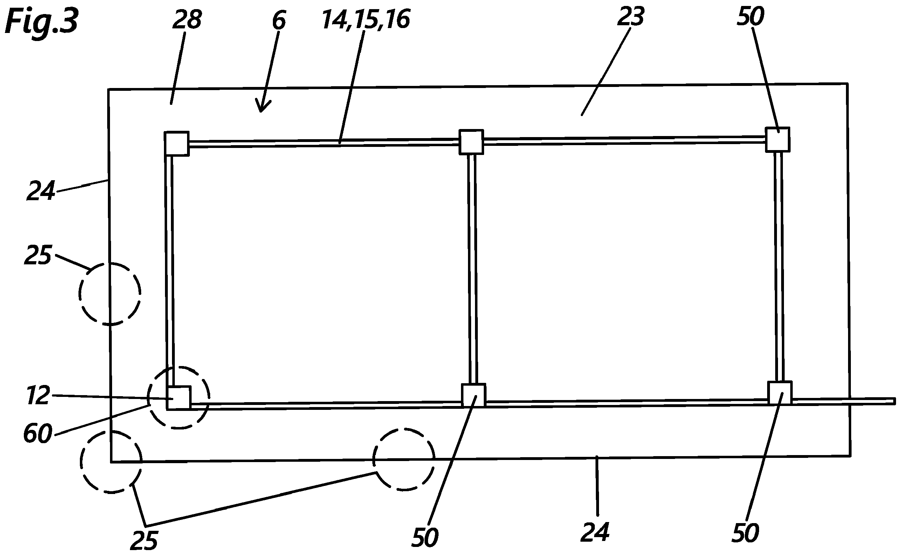

Mit Hilfe von Fig. 2 und Fig. 3 soll das erfindungsgemäße Verfahren zur Initialisierung veranschaulicht werden.

Fig. 2 zeigt schematisch ein noch herzustellendes Gebäudeelement 6 in Form einer Decke 7 in Draufsicht. Die Empfänger 12 wurden in der gezeigten Darstellung auf einer Schalungsplatte 23 platziert und mit einer Datenleitung 14 und einer Energieversorgungsleitung 15 bzw. einem gemeinsamen Kabel 16 verbunden. Die Schalungsplatte 23 definiert (gegebenenfalls mit weiteren Schalungsplatten 23) die Größe des herzustellenden Gebäudeelements 6. An den Kanten 24 im Randbereich der Schalungsplatte 23 wurden vier Empfänger 12 an Referenzpositionen 25 platziert. Die Referenzpositionen 25 können dabei vorgegeben sein oder nach dem Auflegen der Empfänger ausgemessen werden. Die geographische Positionen Referenzpositionen 25 sind im Speicher 19 hinterlegt. Die Position jener weiteren Empfänger 12, im Folgenden auch mit der Bezugsziffer 50 bezeichnet, welche nicht an einer Referenzposition 25 liegen, ist bisher noch unbekannt. Um deren Position zu bestimmen, senden diese weiteren Empfänger 50 über integrierte Sendeeinheiten 22 Kalibriersignale aus. Die ausgesandten Kalibriersignale enthalten eine Empfänger-ID, mit denen die Empfänger 50 eindeutig identifiziert werden können. Die Kalibriersignale werden von den Empfängern 12 an den Referenzpositionen 25 empfangen. Nach dem Empfang wird deren Signalstärke und/oder Signallaufzeit bestimmt. Das Kalibriersignal kann gemeinsam mit dessen Signalstärke und/oder Signallaufzeit und mit einer Empfänger-ID der weiteren Empfänger 50 an die Auswerteeinheit 18 bzw. die Basisstation 13 weitergeleitet werden. Auf Basis der Signalstärke und/oder der Signallaufzeit der Kalibriersignale kann mittels Triangulation in der Basisstation 13 die Position der weiteren Empfänger 50 bestimmt und ebenfalls im Speicher 19 hinterlegt werden. Somit hat sich das System 3 quasi selbst kalibriert. Am später auszuführenden Verfahren zur Positionsbestimmung des Senders 10 sind dann sämtliche Empfänger 12 in dem Gebäudeelement 6 beteiligt, also sowohl die Empfänger 12 an den Referenzpositionen 25 als auch die weiteren Empfänger 50.

Alternativ kann die Position sämtlicher Empfänger 12 auch dadurch bestimmt werden, indem eine Platzierung auf der Schalungsplatte 23 gemäß einem vorgegebenen Plan erfolgt und die Position aus dem Plan in den Speicher 19 der Basisstation 13 übertragen wird. Auch ein Platzieren und anschließendes Ausmessen, beispielsweise mittels Maßband, Entfernungsmessgerät oder GNSS-Sensor ist denkbar. Hierzu kann beispielsweise vorgesehen sein, dass jeder Empfänger 12 einen GNSS-Sensor aufweist. Nach der Bestimmung der Position dem Empfänger 12 wird Beton 27 (siehe Fig. 1 im ausgehärteten Zustand) auf die Schalungsplatte 23 gegossen. Um ein Unterspülen oder Verschieben der Empfänger 23 durch den Beton 27 zu vermeiden, können die Empfänger 12 vorzugsweise zumindest bis zum Ausschalzeitpunkt mit der Schalungsplatte 23, beispielsweise durch Kleben oder Verschrauben, verbunden sein. Wenn eine Bewehrung vorgesehen ist, können die Empfänger 12 auch an dieser befestigt sein. Vorzugsweise wird die Position der Empfänger 12 vor dem Eingießen des Betons 27 ermittelt.

Durch das Eingießen in Beton 27 sind die Empfänger 12 in dem Gebäudeelement 6 eingebettet. Durch das Auflegen auf eine Oberfläche 28 einer Schalung bzw. Schalungsplatte 23 werden die Empfänger 12 nicht vollständig von dem Beton 27 umgossen und sind damit nicht vollständig von dem Gebäudeelement 6 umgeben. Wie in Fig. 1 gezeigt, sind die Empfänger 12 sogar sichtbar und zugänglich.

In einem alternativen Herstellungsverfahren kann vorgesehen sein, an Stelle von Empfängern 12 mehrere Aufnahmeelemente in Form von Hohlkörpern für die Empfänger 12 einzugießen. Die Empfänger 12 können dann nach dem Ausschalen des Gebäudeelements 6 in die Aufnahmeelemente eingefügt werden. Dies erleichtert das Warten des Systems 3.

Fig. 3 zeigt eine Alternative zu dem in Zusammenhang mit Fig. 2 erläuterten Initialisierungsverfahren. Bei der in Fig. 3 gezeigten Alternative sind sämtliche Empfänger 12 bzw. 50 weiter innerhalb, d.h. beabstandet von den Kanten 24, auf der Schalungsplatte 23 angeordnet. An den Kanten 24 im Randbereich der Schalungsplatte 23 befindet sich aber zumindest eine Referenzpositionen 25, im konkreten Falle drei Referenzpositionen 25, deren Positionen bekannt sind, beispielsweise aus einem Plan oder durch Ausmessen. Beabstandet von diesen, an den Kanten 24 liegenden Referenzpositionen 25 wird zumindest ein Empfänger 12 an einer weiteren, weiter innen liegenden Referenzposition 60 auf der Schalungsplatte 23 platziert. Auch diese Referenzposition 60 ist bekannt. Die Referenzpositionen 25, 60 stellen einen absoluten Bezug zum Gebäude 4 dar. Demnach ist auch die Position des zumindest einen Empfängers 12 an der Referenzposition 60 bekannt. Ähnlich wie in Fig. 2 beschrieben kann nun mit Hilfe von Kalibriersignalen die Position von weiteren Empfängern 50 auf der Schalungsplatte 23, die nicht an Referenzpositionen 25, 60 liegen, bestimmt werden.. Hierbei können auch Empfänger 12 an Referenzpositionen 25 bzw. 60 auf weiteren, insbesondere benachbarten, Schalungsplatten 23 (nicht dargestellt) mitwirken. Die Empfänger 12 auf den weiteren Schalungsplatten 23 können die Kalibriersignale nämlich ebenfalls empfangen und an die Auswerteeinheit 18 bzw. die Basisstation 13 weiterleiten und so an der Bestimmung der Position der weiteren Empfänger 50 mitwirken. Diesbezüglich wird auf die Ausführungen zu Fig. 2 verwiesen.

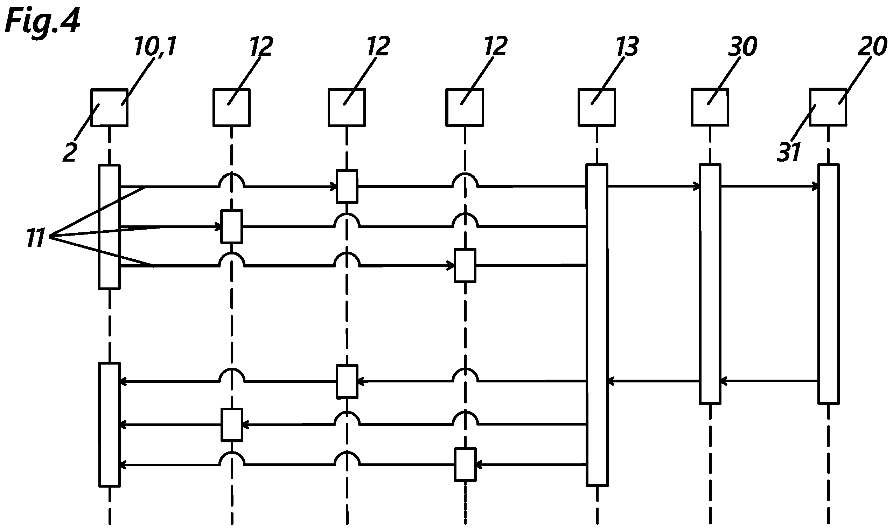

Fig. 4 zeigt ein Sequenzdiagramm zur Positionsbestimmung der Bohrmaschine 2 und deren Notabschaltung über das erfindungsgemäße System 3.

Der Sender 10 an der Bohrmaschine 2 sendet ein Signal 11 aus, welches von drei unterschiedlichen Empfängern 12 in dem Gebäudeelement 6 empfangen wird. Das Sequenzdiagramm in Fig. 4 stellt dabei aus Gründen der Übersicht den Vorgang des Aussendens des Signals 11 nur einmal dar. Jeder Empfänger 12 kann die Signalstärke und/oder die Signallaufzeit des Signals 11 bestimmen und das Signal 11 mitsamt der ermittelten Signalstärke bzw. Signallaufzeit an die Basisstation 13 weiterleiten. Das Signal 11 kann dabei neben einer Sender-ID noch Daten über die Bohrmaschine 2 enthalten. In der Basisstation 13 ermittelt die Auswerteeinheit 18 die lokale Position des Senders 10 in Bezug auf die drei Empfänger 12 auf Basis der Signalstärke und/oder Signallaufzeit mittels Triangulation und verknüpft diese Information mit den im Speicher 19 hinterlegten (globalen) Positionen der drei Empfänger 12, sodass eine globale Positionsinformation des Empfängers 12 in Bezug auf das Gebäude 4 vorliegt. Die Basisstation 13 kann die Position des Senders 10 und die restlichen im Signal 11 enthaltenen Daten an einen Server 30 übertragen, welcher diese speichern, verarbeiten und/oder an das Mobilgerät 20 weiterleiten kann. Natürlich kann auch die Basisstation 13 selbst die Daten speichern, verarbeiten und/oder an das Mobilgerät 20 weiterleiten, der Umweg über den Server 30 ist nicht unbedingt notwendig, aber zweckmäßig. Der Block mit der Bezugsziffer 31 kann an Stelle des Mobilgeräts 20 auch für einen Computer oder eine auf dem Server installierte Applikation stehen. Das Mobilgerät 20 kann nun ebenfalls Daten über die Basisstation 13 an den Sender 10 und damit an die Bohrmaschine 2 senden. Beispielsweise kann das Mobilgerät 20 den Befehl ausgeben, die Bohrmaschine 2 auf Grund abzuschalten. Der Befehl wird in der gezeigten Darstellung wieder zweckmäßig über den Server 30, die Basisstation 13 und die Empfänger 12, welche auch Sendeeinheiten 22 aufweisen, an die Empfangseinheit 21 des Senders 10 weitergeleitet, sodass letztendlich eine Notabschaltung der Bohrmaschine 2 stattfinden kann.

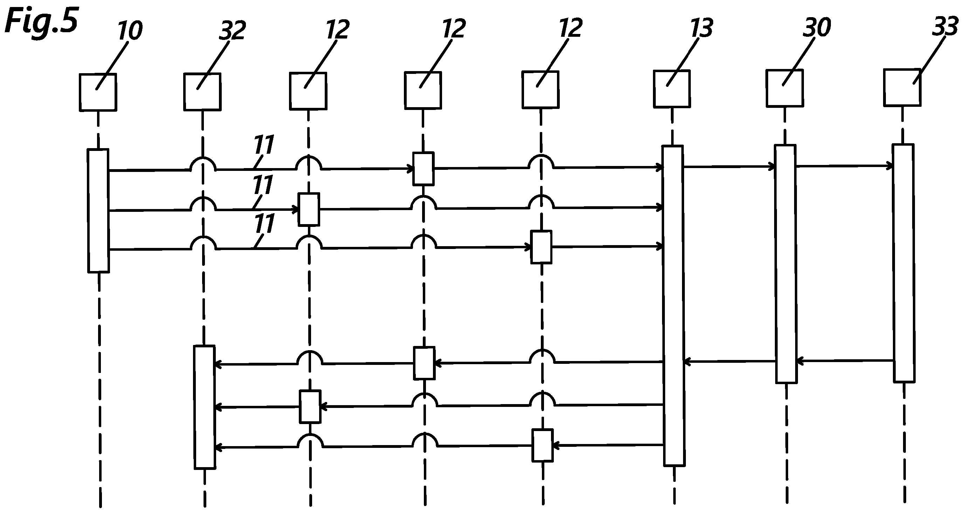

Fig. 5 zeigt ein Sequenzdiagramm zur Positionsbestimmung eines von einem Bauarbeiter getragenen Senders 10 und die Aktivierung einer Warnleuchte an einer Warnweste 32, sobald der Bauarbeiter mit dem Sender 10 einen definierten Bereich auf der Baustelle betritt.

Das Sequenzdiagramm in Fig. 5 stellt dabei aus Gründen der Übersicht den Vorgang des Aussendens des Signals 11 nur einmal dar. Ähnlich wie in Fig. 4 sendet der Sender 10, der von dem Bauarbeiter getragen wird, in zeitlichen Abständen ein Signal 11 aus, das wiederum im dargestellten Beispiel von drei Empfängern 12 empfangen wird. Jeder Empfänger 12 bestimmt die Signalstärke und/oder die Signallaufzeit des Signals 11 und leitet das Signal 11 mitsamt der ermittelten Signalstärke und/oder Signallaufzeit an die Basisstation 13 weiter. Das Signal 11 kann dabei neben einer Sender-ID noch Daten über enthalten. In der Basisstation 13 ermittelt die Auswerteeinheit 18 die lokale Position des Senders 10 in Bezug auf die drei Empfänger 12 auf Basis der Signalstärke und/oder Signallaufzeit mittels Triangulation und verknüpft diese Information mit den im Speicher 19 hinterlegten (globalen) Positionen der drei Empfänger 12, sodass eine globale Positionsinformation des Empfängers 12 in Bezug auf das Gebäude 4 vorliegt. Die Basisstation 13 kann die Positionsinformation auf einen Server 30 übertragen, welcher diese an eine auf dem Server 30 installierte Applikation 33 weitergibt. Der Server 30 ist auch hier wiederum nicht notwendig, aber zweckmäßig. Die Applikation 33 kann auch auf der Basisstation 12 installiert sein. Sobald die Applikation 33 feststellt, dass die Position des Senders 10 in einem definierten Bereich auf der Baustelle, beispielsweise einem Gefahrenbereich, befindet, wird über die Basisstation 13 und die drei Empfänger 12 ein Signal an die Warnweste 32 gesendet, welche daraufhin eine Warnleuchte aktiviert. Hierzu kann die Warnweste 32 eine Empfangseinheit 21 aufweisen oder ebenfalls über einen Sender 10 mit einer Sende- 22 und Empfangseinheit 21 aufweisen.

## Patentansprüche

1. Verfahren zur Bestimmung einer Position eines Senders (10) innerhalb eines Gebäudes (4), insbesondere innerhalb eines Rohbaus, mit den Schritten:
- Aussenden eines Signals (11) durch den Sender (10);
- Empfangen des Signals (11) durch zumindest einen Empfänger (12), wobei der Empfänger (12) in einem Gebäudeelement (6), insbesondere einer Decke (7) oder einer Wand, eingebettet ist; und
- Bestimmung der Position des Senders (10) auf Basis des empfangenen Signals (11) und auf Basis der Position des zumindest einen Empfängers (12) mit Hilfe einer Auswerteeinheit (18).

2. Verfahren nach Anspruch 1, **dadurch gekennzeichnet, dass** nach dem Empfang des vom Sender (10) ausgesandten Signals (11) durch den zumindest einen Empfänger (12) die Signalstärke des Signals (11) bestimmt wird und die Bestimmung der Position des Senders (10) auf Basis der Signalstärke des Signals (11) erfolgt.

3. Verfahren nach Anspruch 1 oder 2, **dadurch gekennzeichnet, dass** nach dem Empfang des vom Sender (10) ausgesandten Signals (11) durch den zumindest einen Empfänger (12) die Signallaufzeit des Signals (11) zwischen dem Sender (10) und dem Empfänger (12) bestimmt wird und die Bestimmung der Position des Senders (10) auf Basis der Signallaufzeit des Signals (11) erfolgt.

4. Verfahren nach einem der Ansprüche 1 bis 3, **dadurch gekennzeichnet, dass** das von dem zumindest einem Empfänger (12) empfangenen Signal (11), vorzugsweise auch die Signalstärke und/oder die Signallaufzeit des Signals (11), an eine Basisstation (13) übermittelt wird, welche sich vorzugsweise außerhalb des Gebäudeelements (6) befindet.

5. Verfahren nach Anspruch 4, **dadurch gekennzeichnet, dass** der zumindest eine Empfänger (12) über ein insbesondere innerhalb des Gebäudeelements (6) verlaufendes Datenkabel (14) mit der Basisstation (13) verbunden ist.

6. Verfahren nach einem der Ansprüche 1 bis 5, **dadurch gekennzeichnet, dass** der Sender (10) an einem Objekt (1), insbesondere an einem Werkzeug oder einem Arbeitsgerät, angebracht ist und das Signal (11) Daten von dem Objekt (1), insbesondere Messdaten und/oder Daten über den Betriebszustand des Objekts (1), enthält.

7. Verfahren nach einem der Ansprüche 1 bis 6, **dadurch gekennzeichnet, dass** der zumindest eine Empfänger (12) über eine insbesondere innerhalb des Gebäudeelements (6) verlaufende Energieversorgungsleitung (15) mit einer Energieversorgung verbunden ist, welche sich vorzugsweise außerhalb des Gebäudeelements (6) befindet.

8. System (3) zur Bestimmung einer Position eines Senders (10) innerhalb eines Gebäudes (4), insbesondere eines Rohbaus, aufweisend:
- zumindest einen Empfänger (12) zum Empfangen eines Signals (11) des Senders (10), wobei der Empfänger (12) zur Einbettung in einem Gebäudeelement (6), insbesondere innerhalb einer Decke (7) oder einer Wand, des Gebäudes (4) vorgesehen ist;
- einen Speicher (19), in dem die Position des Empfängers (12) hinterlegt ist; und
- eine Auswerteeinheit (18), welche auf Basis des durch den Empfänger (12) empfangenen Signals (11) und auf Basis der Position des Empfängers (12) die Position des Senders (10) bestimmt.

9. System (3) nach Anspruch 8, **dadurch gekennzeichnet, dass** der zumindest eine Empfänger (12) benachbart zu einer Oberfläche des Gebäudeelements (4) angeordnet ist oder bündig mit der Oberfläche des Gebäudeelements (6) abschließt.

10. Verfahren zur Initialisierung eines Systems (3) zur Bestimmung einer Position eines Senders (10) innerhalb eines Gebäudes (4) nach einem der Ansprüche 8 bis 9 mit den folgenden Schritten:
- Ermitteln der Position des zumindest einen Empfängers (12) und/oder zumindest eines Aufnahmeelements für den Empfänger (12); und
- Hinterlegung der Position in dem Speicher (19).

11. Verfahren nach Anspruch 10, **dadurch gekennzeichnet, dass** nach der Ermittlung der Position der zumindest eine Empfänger (12) und/oder das zumindest eine Aufnahmeelement in das Gebäudeelement (6) eingegossen wird, wobei bevorzugt der zumindest eine Empfänger (12) und/oder das zumindest eine Aufnahmeelement nach dem Gießen benachbart zu einer Oberfläche des Gebäudeelements (6) liegt oder bündig mit der Oberfläche abschließt.

12. Verfahren nach Anspruch 11, **dadurch gekennzeichnet, dass** der zumindest eine Empfänger (12) und/oder das zumindest eine Aufnahmeelement vor dem Gießen an einer Oberfläche (28) einer Schalung, insbesondere einer Schalungsplatte (23) platziert wird, wobei bevorzugt vorgesehen ist, dass der zumindest eine Empfänger (12) und/oder das Aufnahmeelement zumindest für die Dauer der Herstellung des Gebäudeelements (6) an der Schalung, insbesondere der Schalungsplatte (23), und/oder einer Bewehrung befestigt ist, insbesondere durch Verschrauben, Nageln, Kleben, Clipsen, Aufschieben, Angießen, und/oder Anbinden.

13. Verfahren nach einem der Ansprüche 10 bis 12, **dadurch gekennzeichnet, dass** zumindest zwei Empfänger (12) an im Speicher (19) hinterlegten Referenzpositionen (25) angeordnet sind und die Position eines weiteren Empfängers (12, 50), der eine Sendeeinheit (22) aufweist, ermittelt wird, indem der weitere Empfänger (12, 50) ein Kalibriersignal aussendet, welches von den zumindest zwei Empfängern (12) empfangen wird, woraufhin auf Basis der Signalstärke und/oder der Signallaufzeit des von den zumindest zwei Empfängern (12) empfangenen Kalibriersignals die Position des weiteren Empfängers (12, 50) mittels Triangulation ermittelt und im Speicher (19) hinterlegt wird.

14. Verfahren nach Anspruch 13, **dadurch gekennzeichnet, dass** das Gebäudeelement (6) eine Decke (7) oder eine Wand ist und die Referenzposition (25) in einem Randbereich des Gebäudeelements (6) liegt.

15. Verfahren nach einem der Ansprüche 10 bis 14, **dadurch gekennzeichnet, dass** die Position des zumindest einen Empfängers (12) und/oder des zumindest einen Aufnahmeelements mit Hilfe eines GNSS-Sensors ermittelt wird.
